# EUROPEAN PATENT APPLICATION

(11) **EP 1 773 059 A1**
(43) Date of publication of application: **11.04.2007**
(21) Application number: 05292107.9
(22) Date of filing: 10.10.2005
(51) Int. Cl.: H04N 7/24

(54) **Data streaming method for portable tamper-proof devices**

(71) Applicant: Axalto SA, 92120 Montrouge (FR)
(72) Inventor: Gayosso, José Luis, 92120 Montrouge (FR)
(74) Representative: Jacquot, Ludovic R. G.

(57) **Abstract**

A method of playing digital media contents comprises the steps of storing digital media contents on a portable tamper-proof device and of playing said digital media contents on a user interface device. The method further comprises a decoding step in which the portable tamper-proof device decodes the digital media contents and a streaming step in which the portable tamper-proof device streams the decoded digital media contents to a user interface device.

## Description

The present invention concerns portable tamper-proof devices such as smart cards (e.g. USB smart cards, contactless smart cards, dual interface smart cards etc.), Secure MMC or USB keys, used in connection with user interface devices.

User interface devices are defined as devices having a user interface. A user interface is defined as a feature of the device giving the device the ability to interact with a human being. Examples of user interfaces include keyboards and pinpads, pointing devices such as mice or trackballs, LCDs (liquid crystal displays), microphones, loudspeakers, touch screens, etc.

User interfaces are different from other interfaces such as USB (Universal Serial Bus), which do not permit communication with a human being through any of a human being's five senses.

Examples of user interface devices able to cooperate with portable tamper-proof devices include PDAs, bank ATMs (automatic teller machines), POS (point of sales) terminals, smart phones, cell phones, MP3 players, ticketing machines in train stations or contact-less readers in transportation systems (such as buses or metro), or personal computers (either desktop or laptop).

Portable tamper-proof devices are carried by a user, and are very small (the user can hardly notice their weight). Therefore they often have less processing power than user interface device. They typically have no user interface, potential interaction with the user being normally managed through the user interface device.

Portable tamper-proof devices are typically personal devices (they belong to a specific individual) and often integrate authentication capabilities. They can be used in many applications. For example, it is possible to use them for DRM (Digital Right Management). DRM consists in controlling access to digital media contents. DRM may be used in order to ensure that only legitimate customers having paid for a given movie or song are able to view or listen to it on their user interface device.

Portable tamper-proof devices can store some cryptographic keys needed to decrypt digital media contents and therefore improve the security of the system.

Latest portable tamper-proof devices prototypes can even decrypt digital media contents in real time. For example, USB full speed smart cards can receive an encrypted stream (e.g. a movie) from a network to which the communication device is connected, and return it decrypted, at the same transfer rate, and in parallel continue to receive the continuation of the encrypted stream.

However, digital media contents are normally compressed in order to save storage space, and portable tamper-proof devices do not currently decompress digital media contents but instead send them to the user interface device which manages this processing power intensive task.

Also, especially when the digital media contents are relatively small, for example if they represent a cellular network operator's corporate logo stored on the portable tamper-proof device, digital media contents may be completely loaded onto the user interface device and may potentially remain on it.

For example, the corporate logo of a cellular network operator may remain in a folder and be fetched automatically by the user interface device (e.g. a cell phone) each time it is powered up. This is problematic, since when the user decides to choose a different network operator, the cellular phone might continue to display the previous operator's logo or short movie (or to play a tune specific to the previous operator).

The GSM specification 31.102 describes two possible types of data to be stored in a smart card: images (Section 4.6.1.1 and Annex B) and text strings with the name of the operator (Section 4.2.12).

An organization called OMTP (http://www.omtp.org/) has defined requirements to be submitted to different standardization bodies (such as OMA) concerning the above type of data. The requirements are available in a first document called OMTP Customization (Look and feel menu and application integration), pre-release 1, which document focuses on Handset customization, (including menus, screensavers, keypad sequences, etc.), and in a second document called OMTP Remote Service Provisioning (pre-release 1).

US20050195975 A1 deals with digital media distribution cryptography using media ticket smart cards.

US20050182761 A1 concerns a system and method for dynamically generating content on a portable computing device.

It is one object of the invention to enhance the control of the portable tamper-proof device over the digital media contents which are stored in it.

This can prevent dissemination or misuse of such contents.

To this end, a method and a device as recited in the appended claims are proposed by the invention.

Other features and advantages of the present invention will become apparent from the following description which will be taken in conjunction with the accompanying drawings.

In the drawings:
- figure 1 depicts a cellular phone displaying some corporate data
- figure 2 depicts an ATM displaying some corporate data
- figure 3 is a flowchart illustrating a series of successive steps which are carried out according to an embodiment of the invention;

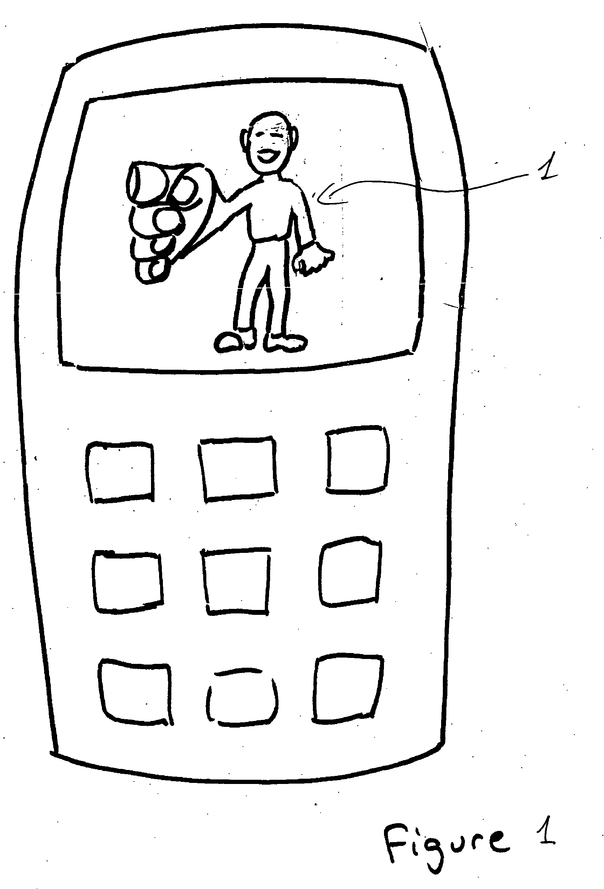

Figure 1 shows an instant picture of an example of digital media contents (corporate data consisting of a short movie) being streamed from a smart card according to the invention onto the display of a cellular phone. Corporate data is defined as data belonging to the cellular network operator (such as logotypes or trademarks, in the form of videos, animations, etc.) or in custody of the cellular network operator (e.g. agreements between service providers and the cellular network operator). The cellular network operator may define some policies pertaining to the storage, delivery and usage of the corporate data. Some corporate data might be loaded into the phone, while others will only be streamed. Examples of corporate data that can be loaded into the cellular phone include data that is not critical to the network operator, or very complex corporate data, such as a video with 3D effects to be computed at decompression time (which may display better or faster thanks to the higher processing power of the cellular phone).

According to the invention, critical data is streamed instead of being loaded. Streaming is defined on Wikipedia (online encyclopedia available at http://en.wikipedia.org/wiki/Streaming media) as follows: "Streaming media is media that is consumed (read, heard, viewed) while it is being delivered. Although it is generally used in the context of certain content types ("streaming audio", "streaming video", etc), streaming is more a property of the delivery systems employed to distribute that content. The distinction is usually applied to media that are distributed over computer networks; most other delivery systems are either inherently streaming (radio, television) or inherently non-streaming (books, video cassettes, audio CDs). The word "stream" is also used as a verb, meaning to deliver streaming media."

To that effect, the SIM card of the present embodiment includes a codec or at least a decoder. A codec is defined in Wikipedia as follows: "Codec is a portmanteau of either "Compressor-Decompressor" or "Coder-Decoder," which describes a device or program capable of performing transformations on a data stream or signal. Codecs can both put the stream or signal into an encoded form (often for transmission, storage or encryption) and retrieve, or decode that form for viewing or manipulation in a format more appropriate for these operations. Codecs are often used in videoconferencing and streaming media solutions."

Therefore the SIM card is able to decode the corporate data and stream them to the cellular phone. It should be noted that this mode of operation is not typical, since usually the data is first streamed and then only decoded, while in the invention the operations are reversed. One of the advantages of this reversed operation is that the decoded data is easier to display on the cellular phone (no processing needed). Another advantage is that it is cumbersome for a hacker to reconstruct the encoded data, and that reconstructing the encoded data may affect the quality of the data (due to the fact that most codecs use lossy compression algorithms, as known in state of the art). The encoded data is the one that is convenient for storage (as it generally occupies a lot less memory space).

The SIM card can perform additional operations such as decrypting the corporate data before decoding it.

By streaming the corporate data from the smart card to the cellular phone, the invention facilitates the playing of the data by the cellular phone, and at the same time it avoids leaving data on the cellular phone, since only the decoded data is transmitted, and since said decoded data is instantly consumed and instantly destroyed.

The cellular network operator logo (which may consist of an image, a video sequence, a sound, a tune etc.) may change over time, or may be modified temporarily according to certain events such as Christmas (in which case a character in the logo could be dressed as a Santa Claus). The invention ensures that the cellular network operator's subscribers see (or otherwise perceive) the latest logo, since the logo has to be streamed from the smart card, which is made up to date thanks to classical mechanisms (such as OTA). Indeed, the cellular network operator does not necessarily control the cellular phone while the smart card is issued and controlled by the cellular network operator, as known from state of the art.

The mechanism of the invention also gives a cellular network operator the possibility to inform its subscribers of its latest offers, which may be limited in time. It is important that such offers remain under control of the cellular network operator, since the offers should be notified to the subscribers as soon as they are valid, and should no longer be visible as soon as they expire. The service information may include information enabling the direct subscription to the service either automatically (for example by pressing a key to accept the offer), or manually (for example by displaying some information such as a phone number to call or a reference number to send in an SMS).

Of course, the invention is not limited to this context of cellular network operators and can be used by any issuer of portable tamper-proof device (or any entity to which such issuer delegates such task), such as a bank, or an online music store (store selling some music from the Internet in formats such as MP3).

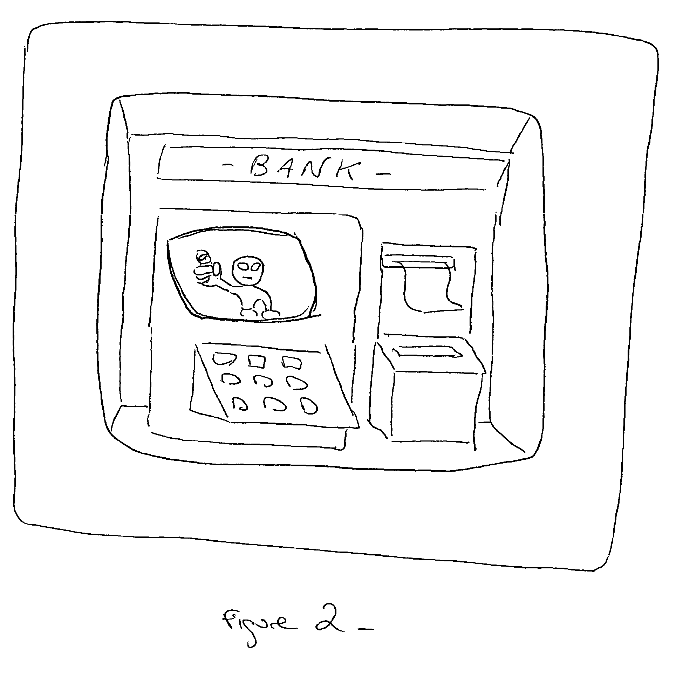

Figure 2 shows an ATM displaying a service offer to a bank card holder. The invention allows a bank to inform its customers of its services such as latest interest rates on loans, or display some limited time offers, even when the customer of the bank inserts his bank card into the ATM of a competing bank. The invention also allows the service offers not remain in the ATM, since no positive deletion action is needed (the service offers are streamed and lost by the ATM as soon as they have been perceived by the card holder). Thanks to the invention, the bank can also send service offers of its partners, for example if the bank partners with an airline, the bank can display the miles status of the card holder and inform him that he reached the number of miles needed to fly to a given destination, or that there is a promotion on a certain destination, the number of miles needed being lower than usual. The invention allows the bank to then propose the user to accept the offer, which may include paying for extra services not provided by the miles (such as airport taxes).

Thanks to the invention, the streaming process operates only if the portable tamper-proof device is present. Advantageously the security can be further improved by authenticating the user interface device before streaming, the streaming being possible only on selected user interface devices.

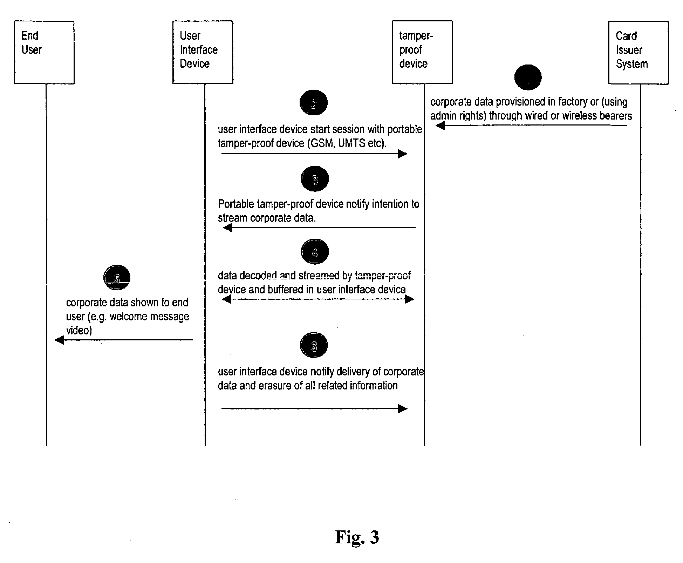

Figure 3 is a flowchart showing the steps corresponding to the tasks executed by the cellular phone and the SIM card in response to the insertion of the SIM card in the cellular phone, according to a possible embodiment of the invention.

In a first step (step 1), corporate data is loaded into the SIM card. Default corporate data may be loaded in the factory during the personalization of the SIM card. Further update of the SIM card corporate data is possible after the SIM card has been delivered to the end user, thanks to mechanisms such as OTA (over the air). Similar techniques would be used with a bank card (the bank card corporate data being remotely updated when inserted in the ATM using administration rights).

In a second step (step 2) the user interface device (a cellular phone in the present embodiment) starts the session as usual (e.g. GSM, UMTS, Transport, etc).

In a third step (step 3) the portable tamper-proof device (SIM card in this embodiment) notifies the availability of corporate data to the cellular phone.

In a fourth step (step 4) the SIM card decodes the corporate data and streams it to the cellular phone. Therefore there is no copy of the sensitive corporate data in the cellular phone (only the current part of the decoded data is available at any point in time, and disappears soon after it is played). Thanks to this step, removing the SIM card from the cellular phone also removes the corporate data from the environment (the cellular phone). The cellular phone buffers the streamed data and will shows it to the end user. The streaming can be implemented with standard smart card protocol (based on ISO 7816 APDUs) or, us more sophisticated implementations (e.g. TCP/IP over USB, etc.).

In a fifth step (step 5) the cellular phone provides an acknowledgement of the end of the streaming session. The acknowledgement may be time-stamped and signed by the cellular phone, and may be used to indicate the full erasure of any information related to the corporate data from the device's memory.

## Claims

1. A method of playing digital media contents comprising the steps of:
a. storing said digital media contents on a portable tamper-proof device
b. playing said digital media contents on a user interface device
**characterized in that** the method comprises:
c. a decoding step in which said portable tamper-proof device decodes said digital media contents
d. a streaming step in which said portable tamper-proof device streams the decoded digital media contents to said user interface device.

2. Method according to claim 1, **characterized in that** the decoding step and the streaming step are run in parallel, the streaming of the decoded digital media contents starting before the whole digital contents are decoded thereby saving temporary storage space on the portable tamper-proof device and reducing the delay preceding the playing of the digital media contents on the user interface device.

3. Method according to any previous claim, **characterized in that** the user interface device is one of the following devices: cellular phone, smart phone, PDA, MP3 player, bank ATM, POS terminal, ticketing machine, contact-less readers in transportation systems or personal computer.

4. A method according to any previous claim, **characterized in that** the portable tamper-proof device is one of the following devices: smart card, USB key, or secure MMC.

5. A method according to any previous claim, **characterized in that** the digital media contents comprise information related to the services offered by a service provider, said information enabling the subscription of the user to a service.

6. A method according to any previous claim, **characterized in that** the user interface device is a communication device connected to a network, and **in that** the digital media contents are updated through said network.

7. Portable tamper-proof device storing digital media contents, **characterized in that** it comprises a decoder for decoding said digital media contents and a streaming component for streaming the decoded digital media contents.

8. Device according to claim 7 **characterized in that** said device is one of the following: smart card, USB key or Secure MMC.
